# EUROPÄISCHE PATENTSCHRIFT

(11) **EP 0 627 566 B1**
(45) Veröffentlichungstag und Bekanntmachung des Hinweises auf die Patenterteilung: **30.07.1997**
(21) Anmeldenummer: 94107867.7
(22) Anmeldetag: 20.05.1994
(51) Int. Cl.: F16B 13/02, F16B 13/00

(54) **Haltedübel**
Holding dowel
Cheville de retenue

(30) Priorität: 03.06.1993 DE 4318534
(43) Veröffentlichungstag der Anmeldung: 07.12.1994
(60) Teilanmeldung: 96110078.1
(73) Patentinhaber: TRW United-Carr GmbH, D-67677 Enkenbach-Alsenborn (DE)
(72) Erfinder: Kraus, Willibald, D-67269 Grünstadt (DE)
(74) Vertreter: Schieschke, Klaus, Dipl.-Ing.

(56) Entgegenhaltungen:
- EP-A- 0 544 054
- AT-B- 249 329
- DE-A- 2 537 368
- FR-A- 2 090 519
- FR-A- 2 517 385

## Beschreibung

Die Erfindung bezieht sich auf einen Haltedübel aus Kunststoff, mit einem bolzenartigen Grundkörper und einem Abschlußflansch, wobei der Grundkörper mindestens zwei sich in Längsrichtung erstreckende, faltenartig eingezogene Bereiche aufweist, zwischen welchen auf dem Umfang des Grundkörpers dem Abschlußflansch gegenüberliegende Rastelemente angeordnet sind.

Als Stand der Technik ist bereit ein derartiger Haltedübel bekannt (DE-OS 2 537 368), welcher so ausgebildet ist, daß zwei einander gegenüberliegende faltenartig eingezogene Bereiche entlang eines am unteren Ende abgeschlossenen Grundkörpers verlaufen. Zwischen diesen beiden eingezogenen Bereichen befinden sich Rastelemente, jeweils in Form einer Kante, welche zu dem unteren geschlossenen Ende des Grundkörpers konisch zulaufen. Infolge dieses konstruktiven Aufbaus ist die gesamte Anordnung wenig flexibel, so daß zur Montage ein bestimmter Aufwand erforderlich ist. Auch die Demontage gestaltet sich entsprechend aufwendig.

Der Erfindung liegt demgegenüber die Aufgabe zugrunde, einen Haltedübel der eingangs genannten Art zu schaffen, welcher bei einfachem Aufbau leicht und mit geringem Kraftaufwand zu montieren ist, andererseits jedoch nach der Montage einen sicheren Sitz in einer Öffnung eines Trägers gewährleistet.

Diese Aufgabe wird erfindungsgemäß dadurch gelöst, daß der Grundkörper an dem dem Abschlußflansch gegenüberliegenden Ende offen ausgebildet ist, daß die Rastelemente stegartige Form aufweisen, mit einer Anlauframpe, einem mittleren Bereich, welcher im wesentlichen parallel zum Grundkörper verläuft und einer der Unterseite des Abschlußflansches zugekehrten Rastrampe, und daß der Abschlußflansch oberhalb der jeweiligen Rastrampe mit einer durchgehenden Aussparung versehen ist, welche bis unterhalb des Abschlußflansches die Wandung des Grundkörpers durchsetzt. Hierdurch ergibt sich der Vorteil, daß ein sehr elastisch gestalteter Grundkörper des Haltedübels vorliegt, welcher damit ohne große Schwierigkeiten in eine Öffnung eines Trägers einsetzbar ist und dort funktionssicher haltert.

In weiterer Ausgestaltung der Erfindung ist die Tiefe der Aussparung geringer als der Abstand zwischen der Unterseite des Abschlußflansches und der Rastrampe, so daß trotz guter Flexibilität eine stabile Einheit vorliegt. Darüberhinaus kann die Breite der Aussparung in dem Abschlußflansch größer als die Breite des darunterliegenden Rastelements sein, so daß auch hierdurch bei genügender Haltewirkung eine gute Elastizität erzielt wird.

Nach einem anderen Merkmal der Erfindung kann der Grundkörper zylinderförmig ausgebildet sein und vier einander gegenüberliegende, faltenartig eingezogene Bereiche aufweisen, zwischen welchen sich am Umfang vier Rastelemente befinden. Die faltenartig eingezogenen Bereiche können hierbei jeweils U-förmig ausgebildet sein.

In weiterer Ausgestaltung der Erfindung kann das offene Ende des Grundkörpers konisch zulaufend gestaltet sein, wobei die Endbereiche der faltenartig eingezogenen Bereiche die Endbereiche des glatten Umfangs des Grundkörpers überragen. Hierdurch ergibt sich auf einfache Weise eine gute Montagehilfe beim Einsetzen des Haltedübels in eine Trägeröffnung bzw. in zwei übereinanderliegende Öffnungen zweier verschiedener Träger.

Der jeweilige Bereich des glatten Umfangs des Grundkörpers ist größer als die Breite des benachbarten, faltenartig eingezogenen Bereichs. Hierbei kann das jeweilige Rastelement in der Mitte des jeweiligen Bereichs des glatten Umfangs des Grundkörpers angeordnet sein.

Bezüglich der Gestaltung des Abschlußflansches kann dieser oberseitig und zentrisch einen schalenartig eingezogenen Bereich aufweisen oder es kann oberhalb des Abschlußflansches mindestens ein Befestigungselement angeordnet sein. Damit ist der erfindungsgemäße Haltedübel für einen großen Einsatzbereich konzipiert.

Die Erfindung wird nachfolgend anhand eines in der Zeichnung dargestellter Ausführungsbeispieles näher beschrieben.

In der Zeichnung zeigen:
- Fig. 1: eine Seitenansicht des erfindungsgemäßen Haltedübels
- Fig. 2: eine perspektivische Seitenansicht des Haltedübels;
- Fig. 3: eine perspektivische Unteransicht des Haltedübels;
- Fig. 4: eine Vorderansicht des Haltedübels;
- Fig. 5: eine Draufsicht auf den Haltedübel;

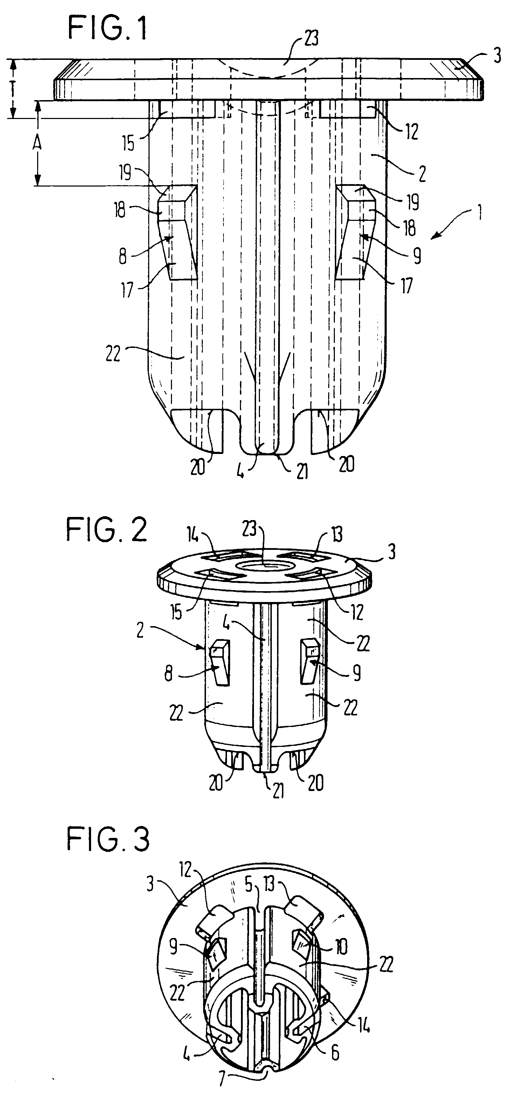

Der in den Fig. 1 - 5 dargestellte Haltedübel 1, welcher aus Kunststoff besteht, weist einen bolzenartigen Grundkörper 2 und einen Abschlußflansch 3 auf.

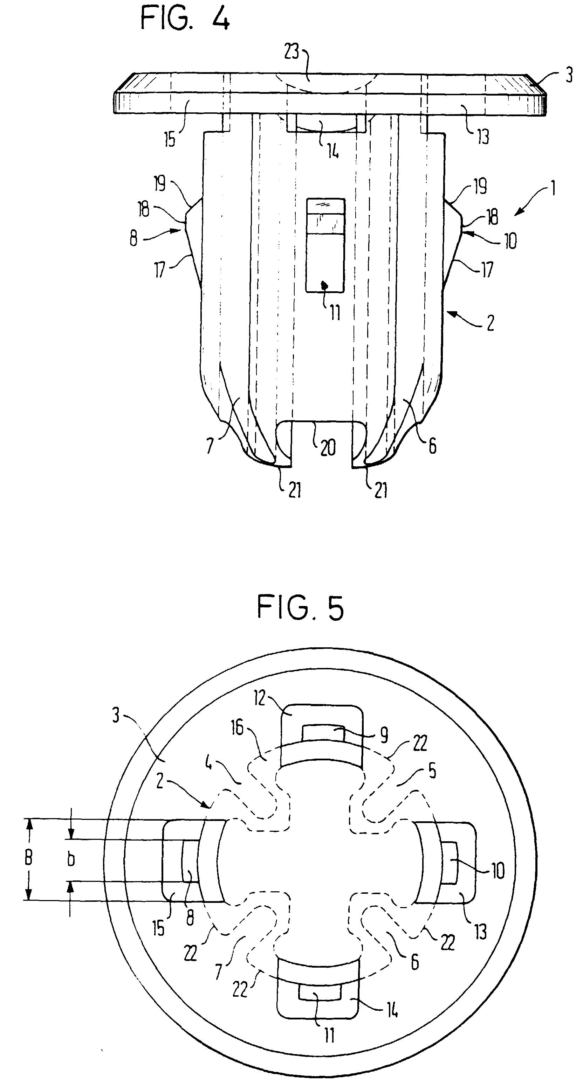

Der Grundkörper 2 besitzt insbesondere gemäß Fig. 3 und 5 vier sich in Längsrichtung erstreckende, faltenartig eingezogene Bereiche 4, 5, 6, 7, welche nach Fig. 5 im Querschnitt etwa U-förmig ausgebildet sind. Weiterhin ist der Grundkörper 2 an dem dem Abschlußflansch 3 gegenüberliegenden Ende offen gestaltet.

Zwischen den faltenartig eingezogenen Bereichen 4, 5, 6, 7 befindet sich jeweils ein glatter Umfang 22 des zylinderförmig ausgebildeten Grundkörpers 2. Auf diesem glatten Umfang 22 sind Rastelemente 8, 9, 10, 11 angeordnet.

Nach Fig. 4 weisen diese Rastelemente stegartige Form auf, mit jeweils einer Anlauframpe 17, einem mittleren Bereich 18, welcher im wesentlichen parallel zum Grundkörper 2 verläuft und mit einer der Unterseite des Abschlußflansches 3 zugekehrten Rastrampe 19.

Insbesondere aus Fig. 3 und 5 geht hervor, daß der Abschlußflansch 3 oberhalb der jeweiligen Rastrampe 19 mit einer durchgehenden Aussparung 12, 13, 14, 15 versehen ist, welche die Wandung 16 des Grundkörpers 2 bis unterhalb des Abschlußflansches 3 durchsetzt. Durch diese Aussparung ergibt sich im Bereich oberhalb der jeweiligen Rastrampe 19 eine erhöhte Flexibilität des erfindungsgemäßen Haltedübels 1.

Nach Fig. 1 ist die Tiefe T jeder der Aussparungen 12, 13, 14, 15 geringer als der Abstand A zwischen der Unterseite des Abschlußflansches 3 und der jeweiligen Rastrampe 19. Aus Fig. 5 ist ersichtlich, daß darüber hinaus die Breite B der jeweiligen Aussparung 12, 13, 14, 15 in dem Abschlußflansch 3 größer ist als die Breite b des darunterliegenden Rastelements 8, 9, 10, 11.

Insbesondere aus Fig. 1 und 4 ist erkennbar, daß das offene Ende des Grundkörpers 2 konisch zulaufend ausgebildet ist, wobei die Endbereiche 21 der faltenartig eingezogenen Bereiche 4, 5, 6, 7 die Endbereiche 20 des glatten Umfangs 22 des Grundkörpers 2 überragen.

Aus Fig. 5 ist erkennbar, daß der jeweilige Bereich des glatten Umfangs 22 des Grundkörpers 2 größer ist als die Breite des benachbarten, faltenartig eingezogenen Bereichs 4, 5, 6, 7. Das jeweilige Rastelement 8, 9, 10, 11 ist in der Mitte des jeweiligen Bereichs des glatten Umfangs 22 des Grundkörpers 2 angeordnet.

Der Abschlußflansch 3 weist nach Fig. 1, 2 und 4 oberseitig und zentrisch einen schalenartig eingezogenen Bereich 23 auf, wodurch sich eine zusätzliche Verbesserung der Flexibilität des erfindungsgemäßes Haltedübels 1 ergibt. Alternativ besteht auch die Möglichkeit, daß oberhalb des Abschlußflansches 3 mindestens ein nicht näher dargestelltes Befestigungselement angeordnet ist, bspw. ein Kabelband, ein Leitungshalter oder ein Clip, welcher mit einem anderen, nicht näher dargestellten Element zu verbinden ist.

## Patentansprüche

1. Haltedübel aus Kunststoff, mit einem bolzenartigen Grundkörper und einem Abschlußflansch, wobei der Grundkörper mindestens zwei sich in Längsrichtung erstreckende, faltenartig eingezogene Bereiche aufweist, zwischen welchen auf dem Umfang des Grundkörpers dem Abschlußflansch gegenüberliegende Rastelemente angeordnet sind,
dadurch gekennzeichnet,
daß der Grundkörper (2) an dem dem Abschlußflansch (3) gegenüberliegenden Ende offen ausgebildet ist,
daß die Rastelemente (8, 9, 10, 11) stegartige Form aufweisen, mit einer Anlauframpe (17), einem mittleren Bereich (18), welcher im wesentlichen parallel zum Grundkörper (2) verläuft und einer der Unterseite des Abschlußflansches (3) zugekehrten Rastrampe (19) und
daß der Abschlußflansch (3) oberhalb der jeweiligen Rastrampe (19) mit einer durchgehenden Aussparung (12, 13, 14, 15) versehen ist, welche bis unterhalb des Abschlußflansches (3) die Wandung (16) des Grundkörpers (2) durchsetzt.

2. Haltedübel nach Anspruch 1,
dadurch gekennzeichnet,
daß die Tiefe (T) der Aussparung (12, 13, 14, 15) geringer ist als der Abstand (A) zwischen der Unterseite des Abschlußflansches (3) und der Rastrampe (19).

3. Haltedübel nach Anspruch 1 und 2,
dadurch gekennzeichnet,
daß die Breite (B) der Aussparung (12, 13, 14, 15) in dem Abschlußflansch (3) größer ist als die Breite (b) des darunterliegenden Rastelements (8, 9, 10, 11).

4. Haltedübel nach einem der vorhergehenden Ansprüche,
dadurch gekennzeichnet,
daß der Grundkörper (2) zylinderförmig ausgebildet ist und vier einander gegenüberliegende, faltenartig eingezogene Bereiche (4, 5, 6, 7) aufweist, zwischen welchen sich am Umfang vier Rastelemente (8, 9, 10, 11) befinden.

5. Haltedübel nach einem der vorhergehenden Ansprüche,
dadurch gekennzeichnet,
daß die faltenartig eingezogenen Bereiche (4, 5, 6, 7) jeweils U-förmig ausgebildet sind.

6. Haltedübel nach einem der vorhergehenden Ansprüche,
dadurch gekennzeichnet,
daß das offene Ende des Grundkörpers (2) konisch zulaufend ausgebildet ist, wobei die Endbereiche (21) der faltenartig eingezogenen Bereiche (4, 5, 6, 7) die Endbereiche (20) des glatten Umfangs des Grundkörpers (2) überragen.

7. Haltedübel nach einem der vorhergehenden Ansprüche,
dadurch gekennzeichnet,
daß der jeweilige Bereich des glatten Umfangs (22) des Grundkörpers (2) größer ist als die Breite des benachbarten, faltenartig eingezogenen Bereichs (4, 5, 6, 7).

8. Haltedübel nach Anspruch 1 und 7,
dadurch gekennzeichnet,
daß das jeweilige Rastelement (8, 9, 10, 11) in der Mitte des jeweiligen Bereichs des glatten Umfangs (22) des Grundkörpers (2) angeordnet ist.

9. Haltedübel nach Anspruch 1,
dadurch gekennzeichnet,
daß der Abschlußflansch (3) oberseitig und zentrisch einen schalenartig eingezogenen Bereich (23) aufweist.

10. Haltedübel nach Anspruch 1,
dadurch gekennzeichnet,
daß oberhalb des Abschlußflansches (3) mindestens ein Befestigungselement angeordnet ist.

## Claims

1. Retaining dowel made of plastic, having a bolt-like basic body and a termination flange, the basic body having at least two longitudinally extending regions which are drawn in in the manner of folds and between which the circumference of the basic body is provided with latching elements which are located opposite the termination flange, characterized in that the basic body (2) is designed to be open at the end which is located opposite the termination flange (3), in that the latching elements (8, 9, 10, 11) are of a web-like form with a run-on ramp (17), a central region (18), which runs essentially parallel to the basic body (2), and a latching ramp (19), which is directed towards the underside of the termination flange (3), and in that the termination flange (3) is provided, above the respective latching ramp (19), with a through-passage (12, 13, 14, 15) which passes through the wall (16) of the basic body (2) beneath the termination flange (3).

2. Retaining dowel according to Claim 1, characterized in that the depth (T) of the through-passage (12, 13, 14, 15) is smaller than the distance (A) between the underside of the termination flange (3) and the latching ramp (19).

3. Retaining dowel according to Claims 1 and 2, characterized in that the width (B) of the through-passage (12, 13, 14, 15) in the termination flange (3) is greater than the width (b) of the latching element (8, 9, 10, 11) located therebeneath.

4. Retaining dowel according to one of the preceding claims, characterized in that the basic body (2) is of cylindrical design and has four mutually opposite regions (4, 5, 6, 7) which are drawn in in the manner of folds and between which the circumference is provided with four latching elements (8, 9, 10, 11).

5. Retaining dowel according to one of the preceding claims, characterized in that the regions (4, 5, 6, 7) which are drawn in in the manner of folds are each designed in the form of a U.

6. Retaining dowel according to one of the preceding claims, characterized in that the open end of the basic body (2) is designed to taper conically, the end regions (21) of the regions (4, 5, 6, 7) which are drawn in in the manner of folds projecting beyond the end regions (20) of the smooth circumference of the basic body (2).

7. Retaining dowel according to one of the preceding claims, characterized in that the respective region of the smooth circumference (22) of the basic body (2) is greater than the width of the adjacent region (4, 5, 6, 7) which is drawn in in the manner of a fold.

8. Retaining dowel according to Claims 1 and 7, characterized in that the respective latching element (8, 9, 10, 11) is arranged in the centre of the respective region of the smooth circumference (22) of the basic body (2).

9. Retaining dowel according to Claim 1, characterized in that the termination flange (3) has, at the top, a central region (23) which is indented in the manner of a bowl.

10. Retaining dowel according to Claim 1, characterized in that at least one fastening element is arranged above the termination flange (3).

## Revendications

1. Cheville de retenue en matière plastique, comprenant un corps de base du type tenon et une collerette de fermeture, le corps de base présentant au moins deux régions qui s'étendent dans le sens longitudinal, sont munies de renfoncements du type pliures et entre lesquelles se trouvent, sur le pourtour du corps de base, des éléments encliquetables situés en vis-à-vis de la collerette de fermeture,
caractérisée par le fait
que le corps de base (2) est de réalisation ouverte à l'extrémité opposée à la collerette de fermeture (3),
que les éléments encliquetables (8, 9, 10, 11) revêtent la forme de membrures comprenant une rampe d'ascension (17), une zone médiane (18) s'étendant pour l'essentiel parallèlement au corps de base (2), et une rampe d'encliquetage (19) tournée vers la face inférieure de la collerette de fermeture (3), et
que la collerette de fermeture (3) est pourvue, au-dessus de la rampe d'encliquetage (19) considérée, d'une échancrure traversante (12, 13, 14, 15) qui traverse la paroi (16) du corps de base (2) jusqu'au-dessous de la collerette de fermeture (3).

2. Cheville de retenue selon la revendication 1,
caractérisée par le fait
que la profondeur (T) de l'échancrure (12, 13, 14, 15) est plus petite que la distance (A) comprise entre la rampe d'encliquetage (19) et la face inférieure de la collerette de fermeture (3).

3. Cheville de retenue selon les revendications 1 et 2,
caractérisée par le fait
que la largeur (B) de l'échancrure (12, 13, 14, 15) pratiquée dans la collerette de fermeture (3) est plus grande que la largeur (b) de l'élément encliquetable (8, 9, 10, 11) sous-jacent.

4. Cheville de retenue selon l'une des revendications précédentes,
caractérisée par le fait
que le corps de base (2) est de réalisation cylindrique et comprend quatre régions (4, 5, 6, 7) opposées les unes aux autres, munies de renfoncements du type pliures, et entre lesquelles quatre éléments encliquetables (8, 9, 10, 11) se trouvent sur le pourtour.

5. Cheville de retenue selon l'une des revendications précédentes,
caractérisée par le fait
que les régions (4, 5, 6, 7) à renfoncements du type pliures sont respectivement réalisées de configuration en U.

6. Cheville de retenue selon l'une des revendications précédentes,
caractérisée par le fait
que l'extrémité ouverte du corps de base (2) est réalisée avec convergence tronconique, les zones extrêmes (21) des régions (4, 5, 6, 7) à renfoncements du type pliures dépassant au-delà des zones extrêmes (20) du pourtour lisse du corps de base (2).

7. Cheville de retenue selon l'une des revendications précédentes,
caractérisée par le fait
que le segment considéré du pourtour lisse (22) du corps de base (2) est plus grand que la largeur de la région voisine (4, 5, 6, 7) à renfoncement du type pliure.

8. Cheville de retenue selon les revendications 1 et 7,
caractérisée par le fait
que l'élément encliquetable (8, 9, 10, 11) considéré est disposé au centre du segment considéré du pourtour lisse (22) du corps de base (2).

9. Cheville de retenue selon la revendication 1,
caractérisée par le fait
que la collerette de fermeture (3) présente, au centre de sa face supérieure, une zone (23) encaissée à la manière d'une cuvette.

10. Cheville de retenue selon la revendication 1,
caractérisée par le fait
qu'au moins un élément de fixation est disposé au-dessus de la collerette de fermeture (3).
